Europäisches Patentamt

**European Patent Office**

**Office européen des brevets**

(19)

(11) Veröffentlichungsnummer: **0 389 854**
**A1**

(12) ## EUROPÄISCHE PATENTANMELDUNG

(21) Anmeldenummer: **90104601.1**

(22) Anmeldetag: **12.03.90**

(51) Int. Cl.⁵: **B63H 9/06, B32B 27/36**

(30) Priorität: **22.03.89 DE 8903610 U**
**22.03.89 DE 8903609 U**
**02.09.89 DE 8910497 U**
**02.09.89 DE 8910498 U**
**04.09.89 DE 8910535 U**
**04.09.89 DE 8910536 U**

(43) Veröffentlichungstag der Anmeldung:
**03.10.90 Patentblatt 90/40**

(84) Benannte Vertragsstaaten:
**AT BE DE DK ES FR GB IT NL SE**

(71) Anmelder: **HOECHST AKTIENGESELLSCHAFT**
**Postfach 80 03 20**
**D-6230 Frankfurt am Main 80(DE)**

(72) Erfinder: **Rohrka, Heinz-Werner**
**Aulgasse 2a**
**D-6229 Keidrich(DE)**
Erfinder: **Hessberger, Harald, Dr.**
**In den Dörrwiesen 6**
**D-6270 Idstein(DE)**
Erfinder: **Schmah, Günter**
**Max-Planck-Strasse 35c**
**D-6500 Mainz-Gonsenheim(DE)**

(54) **Segel für Sportgeräte, insbesondere Surfsegel, aus Polyesterfolie.**

(57) Das Segel für Sportgeräte, insbesondere Surfsegel, besteht aus einer mehrschichtigen Verbundfolie aus einer streckorientierten und thermofixierten Polyesterfolie, vorzugsweise aus Polyethylenterephthalat, und wenigstens einer Kunststoffschicht aus Polyolefin, Polyamid, Polyester, Polyvinylchlorid oder Fluorkohlenstoffharz auf wenigstens einer der beiden Oberflächen der Polyesterfolie.

EP 0 389 854 A1

## Segel für Sportgeräte, insbesondere Surfsegel, aus Polyesterfolie

Die Erfindung bezieht sich auf ein Segel auf Basis einer mehrschichtigen Verbundfolie aus einer streckorientierten und thermofixierten Polyesterfolie, insbesondere Polyethylenterephthalatfolie.

Das Segel ist für Sportgeräte vorgesehen, die unter Ausnutzung der Windenergie der Fortbewegung auf der Erde, im Wasser oder der Luft dienen. Solche Sportgeräte sind beispielsweise Strandgleiter, Segelschiffe, Surfbretter, Segelflugzeuge, Drachensegler, ultraleichte Flugzeuge oder Luftballone.

Es sind bereits mehrschichtige Segel, insbesondere Surfsegel, bekannt geworden, die aus einer biaxial streckorientierten und thermofixierten Polyesterfolie bestehen, welche mit einem Fasergewebe verklebt ist (EP-A-0 227 922). Gegenüber gewebten Segeltüchern sind diese Segelfolien luftdicht und ergeben eine größere Schubkraft. Außerdem ist dieses Material aufgrund seiner hohen Reißfestigkeit für diese Anwendung besonders geeignet.

An Surfsegel aus Kunststoffolie wurde festgestellt, daß sie bei häufigem Gebrauch relativ rasch altern und zum Verspröden neigen. Insbesondere ist ihre Weiterreißfestigkeit zu gering.

Es ist deshalb Aufgabe der Erfindung ein Segel, insbesondere Surfsegel, aus Polyesterfolie vorzuschlagen, das verbesserte mechanische Stabilität, erhöhte Weiterreißfestigkeit, gute UV-Beständigkeit, hohe Transparenz, geringes Flächengewicht sowie erhöhte Steifigkeit gegen Flattern des Segels beim Surfen aufweist.

Diese Aufgabe wird gelöst durch das Segel mit den in Anspruch 1 genannten Merkmalen. Die abhängigen Ansprüche geben zweckmäßige Weiterbildungen an.

Das Segel hat vorzugsweise die Form eines Surfsegels für Surfbretter, ist jedoch auch für andere Sportgeräte geeignet, welche die Windenergie zur Fortbewegung ausnützen.

Es besteht aus einem mehrschichtigen Verbund aus wenigstens zwei Kunststoffolien, von denen die eine eine biaxial streckorientierte und thermofixierte Polyesterfolie ist. Der Polyester ist ein Polyester-Homopolymerisat oder ein Copolyester, ein Gemisch verschiedener Polyester sowie eine Mischung von Polyester mit anderen Polymeren, insbesondere Polyethylenterephthalat (PETP). Die Polyesterfolie ist eine einlagige Folie oder besteht aus mehreren coextrudierten Schichten, die sich im wesentlichen nur durch den Zusatz von Additiven und/oder durch die Rohstoffkombination unterscheiden.

Auf einer oder auf beiden Oberflächen der Polyesterfolie ist eine Kunststoffschicht vorhanden, die aus Polyolefin, Polyamid, Polyester oder Polyvinylchlorid besteht. Diese Kunststoffschichten sind zweckmäßigerweise streckorientierte Kunststofffolien, die mit der Polyesterfolie verklebt oder coextrudiert sind. In einer weiteren Ausführungsform besteht die Kunststoffschicht aus einem Fluorkohlenstoffharz, vorzugsweise von Polytetrafluorethylen, insbesondere auf Basis von Tetrafluorethylen-Ethylen-Copolymerisat (ETFE). ETFE ist besonders bevorzugt, wobei die beiden Monomeren im Mol-Verhältnis 4:6 bis 6:4 vorliegen. Diese Fluorkohlenstoffharzschicht enthält gegebenenfalls bis zu 50, insbesondere 5 bis 35 Gew.-% Polyester, insbesondere Polyethylenterephthalat, in Mischung mit dem bzw. den Fluorkohlenstoffpolymeren. Diese Kunststoffschicht ist nicht streckorientiert und thermofixiert, sondern wird nach der Schmelzextrusion und Abkühlung ohne weitere Nachbehandlung mit der Polyesterfolie verbunden. Auch die Polyolefinschicht kann durch Extrusionsbeschichtung auf die Polyesterfolie aufgebracht werden und ist dann weder streckorientiert noch thermofixiert.

Ein geeignetes Polyolefin enthält Einheiten von alpha-Olefinen mit 2 bis 6 C-Atomen, vorzugsweise ist es ein Ethylen- und/oder Propylen-Einheiten enthaltendes Homo-oder Mischpolymerisat, wie es auch in der EP-A-0 227 922 als thermoplastisches Kunststoffmaterial für die Herstellung eines Segels beschrieben wird. Die Dichte der streckorientierten und nicht streckorientierten Polypropylenfolie beträgt gewöhnlich 0,90 bis 0,92 g/cm³, die Dichte der Polyethylenfolie 0,89 bis 0,96 g/cm³. Die Polyolefinfolie ist einschichtig oder besteht aus mehreren coextrudierten Schichten, z. B. aus HDPE/LDPE oder LLDPE/LDPE. Das Polyamid umfaßt insbesondere Polyamid 6, Polyamid 6.6, Polyamid 12 oder Mischungen dieser Polyamide. Wenn die weitere Kunststoffschicht aus Polyester besteht, ist der Polyester vorzugsweise Polyethylenterephthalat.

Eine Ausführungsform mit besonders guten mechanischen Eigenschaften besteht aus der biaxial streckorientierten und thermofixierten Polyesterfolie, welche auf einer oder beiden Oberflächen die Polyolefinschicht trägt. Die Polyolefinschicht bzw. eine der beiden Polyolefinschichten ist mit einem Vliesstoff verbunden, so daß der Folienverbund einen dreischichtigen ABC-oder vierschichtigen BABC-Aufbau zeigt. Die A-Schicht besteht aus der Polyesterfolie, die B-Schichten aus Polyolefin und die C-Schicht aus dem Vliesstoff. Die Polyolefinschicht ist nicht notwendigerweise streckorientiert und thermofixiert. Sie ist mit der Polyesterfolie gewöhnlich durch Schmelzextrusion oder durch einen Klebstoff verbunden.

Der Vliesstoff enthält im wesentlichen Fasern und/oder Filamente aus Polyester, insbesondere PETP, oder Polyolefin, insbesondere aus Polyolefinen, die oben als Material für die Polyolefinschicht genannt werden. Erfindungsgemäß geeignete Vliesstoffe sind Wirrvliesstoffe. Sie sind flächige Gebilde, in denen eine Vielzahl unterschiedlich oder gleich langer Fasern oder Filamente ohne besondere Vorzugsrichtung, d. h. rein statistisch, übereinandergelegt sind, wobei der Zusammenhalt des Flächengebildes durch die den Fasern infolge Präparation und Kräuselung eigene Haftung und/oder Kalandrierung und/oder Bindemittel gewährleistet wird. Derartige WirrVliesstoffe können auf verschiedene Arten hergestellt werden, nämlich mechanisch durch Kalandrieren oder Krempeln, aerodynamisch durch Lufttransport und Ablegen unter Ansaugung auf luftdurchlässigen Unterlagen, hydrodynamisch durch Suspension kurzstapliger, vorwiegend synthetischer Fasern in Wasser unter Zugabe von Bindemittel, Aufbringen auf ein Sieb und Trocknen, und schließlich durch direktes Ablegen von Filamenten in Wirrlage auf ein Transportband unter einer oder mehreren Spinndüsen und anschließender Verfestigung durch Vernadeln oder Kalandrieren und/oder mit Hilfe von Bindemitteln.

Die im Rahmen des erfindungsgemäßen Schichtstoffverbundes zum Einsatz kommenden Vliesstoffe besitzen insbesondere den Vorteil, daß sie neben einer hervorragenden Einreißfestigkeit und Weiterreißfestigkeit auch eine ganz besonders hohe Dauerbeständigkeit gegen thermische und chemische Einflüsse, insbesondere auch Witterungseinflüsse aufweisen.

Das Segel hat vorzugsweise zwei-, drei- oder vierschichtigen Aufbau. Hierbei sind eventuell vorhandene Klebstoffschichten aufgrund ihrer vergleichsweise geringen Dicke von kleiner als 5, insbesondere gleich/kleiner als 3 Mikrometer unberücksichtigt. Bei einer dreischichtigen Struktur bildet die streckorien tierte Polyesterfolie die Mittelschicht, wobei die beiden äußeren Schichten aus verschiedenen, vorzugsweise aus gleichen Kunststoffschichten bestehen. Das vierschichtige Segel zeigt einen ABAB- oder ABAC-Aufbau, wobei die A-Schicht aus der streckorientierten Polyesterfolie und die B- und C-Schichten aus den weiteren Kunststoffschichten bestehen.

Die Dicke der streckorientierten Polyesterfolie liegt im allgemeinen bei 12 bis 200, vorzugsweise 20 bis 150, insbesondere 25 bis 100 Mikrometer, die damit verbundene Kunststoffschicht zeigt gewöhnlich eine Dicke von 20 bis 150, insbesondere 25 bis 100 Mikrometer. Die Gesamtdicke einer zweischichtigen Verbundfolie aus diesen Schichten beträgt mindestens 40, vorzugsweise 50 bis 350, insbesondere 80 bis 300 Mikrometer.

Die Herstellung des mehrschichtigen Folienverbundes erfolgt beispielsweise durch Verkleben der Einzelfolien, auf deren Oberfläche ein UV-beständiger Klebstoff als Feststoff oder in gelöster bzw. dispergierter Form aufgebracht ist. Besonders geeignete Klebstoffe bestehen aus zwei Komponenten, z. B. aus einer Polyesterurethan-Verbindung, die mit einem multifunktionellen Isocyanat vernetzt wird. Es ist auch möglich, die Schichten aus Polyolefin und Fluorkohlenstoffpolymeren durch Extrusionsbeschichtung auf die Polyesterfolie aufzubringen. Hierbei wird durch die oberflächige Oxidation der heißen Polyolefinschmelze an der Luft eine verbesserte Verbundhaftung mit der Polyesterfolie erreicht. In diesem Fall ist die Polyolefinschicht nicht streckorientiert.

Eine weitere Möglichkeit zur Herstellung des Verbundes ist das Kalandrierverfahren. Dabei werden die einzelnen Schichten in einem Walzenspalt zusammengeführt und unter Wärmeeinwirkung verpreßt. Die Wärmeeinwirkung geschieht in einem Temperaturbereich zwischen 150 und 250 °C. Der bei dem Kalandrierverfahren aufzuwendende Liniendruck liegt im Bereich von 400 bis 1200 N/cm.

Bei Verwendung von Einzelfolien zur Herstellung des Folienverbundes werden diese, vorzugsweise die Polyesterfolie, vor dem Verkleben mit einem Außen- oder Zwischenlagendruck versehen. Ferner besteht die Möglichkeit, durch Zusatz von Farbstoff die Einzelfolien und/oder die Klebstoffschicht einzufärben. Die Einzelfolien enthalten gegebenenfalls UV-Licht absorbierende Verbindungen, wie sie beispielsweise in der EP-A-0 227 922 als UV-Stabilisatoren in thermoplastischem Kunststoff beschrieben werden. Der Vliesstoff wird mit der Polyolefinschicht direkt, d. h. ohne Zwischenschicht, nur durch Anwendung von Druck im Bereich von 1 bis 3 bar und erhöhter Temperatur, insbesondere bei 100 bis 300 °C verbunden. Die Preßzeit ist relativ kurz und beträgt maximal nur wenige Sekunden.

Das Segel zeigt beispielsweise den folgenden Aufbau, die Polyethylenterephthalatfolien (PETP-Folien) sind alle biaxial streckorientiert und thermofixiert.

1. Eine einlagige oder coextrudierte mehrschichtige PETP-Folie (Dichte maximal 1,4 g/cm³), eine Klebstoffschicht und eine einlagige oder coextrudierte mehrschichtige PETP-Folie (Dichte maximal 1,4 g/cm³). Dicke der beiden Folien jeweils 12 bis 120 Mikrometer, Gesamtdicke der Verbundfolie 50 bis 245 Mikrometer.

2. Eine einlagige oder coextrudierte mehrschichtige PETP-Folie (Dichte kleiner/gleich 1,4 g/cm³, Dicke 12 bis 120 Mikrometer), eine Klebstoffschicht und eine einlagige oder coextrudierte mehrschichtige, biaxial streckorientierte Polypropylenfolie (BOPP) (Dichte 0,91 g/cm³, Dicke 20 bis 50 Mikrometer), Gesamtdicke der Verbundfolie 50 bis 175 Mikrometer.

3. Eine einlagige oder coextrudierte mehrschichtige Polyethylenfolie (PE) (Dichte 0,89 bis 0,96 g/cm$^3$, Dicke 20 bis 50 Mikrometer), eine Klebstoffschicht, eine einlagige oder coextrudierte mehrschichtige PETP-Folie (Dichte maximal 1,4 g/cm$^3$, Dicke 12 bis 120 Mikrometer), eine Klebstoffschicht, eine einlagige oder coextrudierte mehrschichtige PE-Folie (Dichte 0,89 bis 0,96 g/cm$^3$, Dicke 20 bis 50 Mikrometer), Gesamtdicke der Verbundfolie 54 bis 230 Mikrometer.

4. Eine einlagige oder coextrudierte mehrschichtige Polypropylenfolie (UPP, Dichte 0,90 bis 0,92 g/cm$^3$, Dicke 20 bis 50 Mikrometer), eine Klebstoffschicht, eine einlagige oder coextrudierte mehrschichtige PETP-Folie (Dichte kleiner/gleich 1,4 g/cm$^3$, Dicke 12 bis 120 Mikrometer), eine Klebstoffschicht und eine einlagige oder coextrudierte mehrschichtige UPP-Folie (Dichte 0,90 bis 0,92 g/cm$^3$, Dicke 20 bis 50 Mikrometer), Gesamtdicke der Verbundfolie 54 bis 230 Mikrometer.

5. Eine einlagige Polyamidfolie (PA), Dicke 20 bis 50 Mikrometer, aus PA 6, PA 6.6 oder PA 12, eine Klebstoffschicht, eine einlagige oder coextrudierte mehrschichtige PETP-Folie, Dicke 12 bis 120 Mikrometer, eine Klebstoffschicht und eine einlagige Polyamidfolie, Dicke 20 bis 50 Mikrometer, aus PA 6, PA 6.6 oder PA 12, Gesamtdicke der Verbundfolie 54 bis 230 Mikrometer.

6. Eine einlagige PVC-Folie (Dichte 1,2 bis 1,4 g/cm$^3$, Dicke 30 bis 50 Mikrometer), eine Klebstoffschicht, eine einlagige oder coextrudierte mehrschichtige PETP-Folie (Dicke 12 bis 120 Mikrometer), eine Klebstoffschicht und eine einlagige PVC-Folie (Dichte 1,2 bis 1,4 g/cm$^3$, Dicke 30 bis 50 Mikrometer), Gesamtdicke der Verbundfolie 74 bis 230 Mikrometer.

7. Eine einlagige oder coextrudierte mehrschichtige PETP-Folie (Dicke 12 bis 150 Mikrometer), eine Klebstoffschicht, eine einlagige oder coextrudierte mehrschichtige PE-Folie (Dichte 0,89 bis 0,96 g/cm$^3$, Dicke 20 bis 50 Mikrometer), eine Klebstoffschicht, eine einlagige oder coextrudierte mehrschichtige PETP-Folie (Dicke 12 bis 150 Mikrometer), eine Klebstoffschicht und eine einlagige oder coextrudierte mehrschichtige PE-Folie (Dichte 0,89 bis 0,96 g/cm$^3$, Dicke 20 bis 50 Mikrometer), Gesamtdicke der Verbundfolie 67 bis 415 Mikrometer.

8. Eine einlagige oder coextrudierte mehrschichtige PETP-Folie (Dicke 12 bis 150 Mikrometer), eine Klebstoffschicht, eine einlagige oder coextrudierte mehrschichtige UPP-Folie (Dicke 20 bis 50 Mikrometer), eine Klebstoffschicht, eine einlagige oder coextrudierte mehrschichtige PETP-Folie (Dicke 12 bis 150 Mikrometer) eine Klebstoffschicht und eine einlagige oder coextrudierte mehrschichtige UPP-Folie (Dicke 20 bis 50 Mikrometer), Gesamtdicke der Verbundfolie 67 bis 415 Mikrometer.

9. Eine einlagige oder coextrudierte mehrschichtige PETP-Folie (Dichte maximal 1,4 g/cm$^3$, Dicke 12 bis 150 Mikrometer), eine Klebstoffschicht und eine einlagige ETFE-Folie (Dichte 1,70 bis 1,80 g/cm$^3$, Dicke 25 bis 150 Mikrometer), Gesamtdicke mindestens 50 Mikrometer.

10. Eine einlagige oder coextrudierte mehrschichtige PETP-Folie (Dichte maximal 1,4 g/cm$^3$, Dicke 12 bis 150 Mikrometer), eine Klebstoffschicht und eine einlagige Folie aus einer Mischung von PETP und ETFE (Gewichtsverhältnis 30 Gew.-Teile zu 70 Gew.-Teile, Dichte von 1,4 bis 1,75 g/cm$^3$, Dicke 25 bis 150 Mikrometer), Gesamtdicke mindestens 50 Mikrometer.

11. Eine einlagige oder coextrudierte mehrschichtige PETP-Folie (Dichte maximal 1,4 g/cm$^3$, Dicke 25 bis 100 Mikrometer), jeweils eine Klebstoffschicht auf beiden Oberflächen und jeweils eine einlagige ETFE-Folie (Dichte 1,70 bis 1,80 g/cm$^3$, Dicke 25 bis 100 Mikrometer), auf jeder Klebstoffschicht, Gesamtdicke mindestens 52 Mikrometer.

12. Eine einlagige oder coextrudierte mehrschichtige PETP-Folie (Dichte maximal 1,4 g/cm$^3$, Dicke 12 bis 150 Mikrometer), gegebenenfalls eine Klebstoffschicht, eine einlagige oder coextrudierte mehrschichtige PE-Folie (Dichte 0,89 bis 0,96 g/cm$^3$, Dicke 20 bis 100 Mikrometer), oder PP-Folie (Dichte 0,90 bis 0,92 g/cm$^3$, Dicke 20 bis 100 Mikrometer), und einen Vliesstoff aus PETP-oder Polyolefin-Fasern (Flächengewicht 10 bis 200 g/m2).

Die Erfindung wird durch die nachfolgenden Beispiele näher erläutert, die Dicke der Klebstoffschichten betragt etwa 0,8 bis 3 Mikrometer.

Beispiel 1

Segel mit Folienaufbau AA

Es wurden zwei einlagige, biaxial streckorientierte und thermofixierte 65 Mikrometer dicke Folien aus Polyethylenterephthalat kleberkaschiert. Als Klebstoff wurde ein UV-beständiges Zweikomponentensystem auf Basis von Polyurethan eingesetzt.

Beispiel 2

Segel mit Folienaufbau AB

Es wurde eine einlagige, biaxial verstreckte und thermofixierte 50 Mikrometer dicke PETP-Folie mit einer einlagigen 50 Mikrometer dicken nichtorientierten Folie aus ETFE (Schmelzbereich 260 bis 290 °C) kleberkaschiert. Als Klebstoff wurde ein UV-beständiges Zweikomponentensystem auf Basis von Polyurethan eingesetzt.

## Beispiel 3

Segel mit Folienaufbau BAB

Es wurden zwei einlagige identische PE-Folien (Dicke 50 Mikrometer, Dichte 0,905 g/cm$^3$) gegen die Oberflächen einer einlagigen, biaxial verstreckten, thermofixierten 50 Mikrometer dicken Folie aus Polyethylenterephthalat kleberkaschiert. Als Klebstoff wurde ein UV-beständiges Polyurethansystem eingesetzt.

## Beispiel 4

Segel mit Folienaufbau ABAB

Es wurde ein Vierlagenverbund, der folgenden Aufbau hatte, kleberkaschiert:
Eine biaxial verstreckte, thermofixierte PETP-Folie (Dicke 50 Mikrometer), eine PE-Folie (Dicke 35 Mikrometer), eine biaxial verstreckte, thermofixierte PETP-Folie (Dicke 30 Mikrometer), eine PE-Folie (Dicke Mikrometer).

## Beispiel 5

Segel mit Folienaufbau ABC

Es wurde eine einlagige, biaxial verstreckte und thermofixierte 75 Mikrometer dicke PETP-Folie mit einer einlagigen 40 Mikrometer dicken Polyethylenfolie (Dichte 0,92 g/cm$^3$) kleberkaschiert. Als Klebstoff wurde ein UV-beständiges Zweikomponentensystem auf Basis von Polyurethan eingesetzt. Der Verbund wurde mit einem Vliesstoff aus PETP-Fasern (Flächengewicht 40 g/m$^2$) bei 180 °C und 800 N/cm Druck mit einer Kalanderwalze verpreßt.

## Beispiel 6

Segel mit Folienaufbau BABC

Es wurden zwei einlagige identische PE-Folien (Dicke 50 Mikrometer, Dichte 0,905 g/cm$^3$) gegen die Oberflächen einer einlagigen, biaxial verstreckten, thermofixierten 50 Mikrometer dicken PETP-Folie kleberkaschiert. Als Klebstoff wurde ein UV-beständiges Polyurethansystem eingesetzt. Der Verbund wurde mit einem Vliesstoff aus PE-Fasern (Flächengewicht 40 g/m$^2$) bei 180 °C und 800 N/cm Druck mit einer Kalanderwalze verpreßt.

Aufgrund des Aufbaus der Verbundfolien konnte die mechanische Stabilität gegenüber einer Monofolie verbessert werden. Gleichzeitig erreichte man mit den Verbundfolien eine gute Witterungsbeständigkeit und eine verbesserte Einreiß- und Weiterreißfestigkeit gegenüber den bekannten Segeln aus mehrlagigen Verbundfolien.

## Ansprüche

1. Segel für Sportgeräte, insbesondere Surfsegel, auf Basis einer mehrschichtigen Verbundfolie aus einer streckorientierten und thermofixierten Polyesterfolie, vorzugsweise aus Polyethylenterephthalat, dadurch gekennzeichnet, daß es aus einem mindestens zweischichtigen Verbund besteht, der aus der Polyesterfolie und wenigstens einer Kunststoffschicht aus Polyolefin, Polyamid, Polyester, Polyvinylchlorid oder Fluorkohlenstoffharz auf wenigstens einer der beiden Oberflächen der Polyesterfolie aufgebaut ist.

2. Segel nach Anspruch 1, dadurch gekennzeichnet, daß es dreischichtig aufgebaut ist, wobei die Polyesterfolie die mittlere Schicht bildet und die beiden äußeren Kunststoffschichten vorzugsweise aus dem gleichen Material aufgebaut sind.

3. Segel nach Anspruch 1, dadurch gekennzeichnet, daß es vierschichtig aufgebaut ist, wobei die Polyesterfolie die erste und die dritte Schicht und die Kunststoffschicht die zweite und die vierte Schicht bildet.

4. Segel nach einem der Ansprüche 1 bis 3, dadurch gekennzeichnet, daß die mit der Polyesterfolie verbundenen Kunststoffschichten eine Polyamidfolie aus Polyamid 6, Polyamid 6.6 und/oder Polyamid 12, eine Polyolefin-Folie aus alpha-Olefin-Einheiten mit 2 bis 6, insbesondere 2 und/oder 3 C-Atomen, eine Polyesterfolie aus Polyethylenterephthalat, oder eine Folie auf Basis von Polytetrafluorethylen und/oder Tetrafluorethylen-Ethylen-Copolymerisat umfassen, wobei die Kunststoffschichten mit der Polyesterfolie verklebt oder coextrudiert sind.

5. Segel nach einem der Ansprüche 1 bis 4, dadurch gekennzeichnet, daß die Kunststoffschicht eine Dicke von 20 bis 150, vorzugsweise 25 bis 100 Mikrometer und die Polyesterfolie eine Dicke von 12 bis 200, vorzugsweise 20 bis 150, insbesondere 25 bis 100 Mikrometer aufweist, wobei die Gesamtdicke der Verbundfolie mindestens 40, vorzugsweise 50 bis 350, insbesondere 80 bis 300 Mikrometer beträgt.

6. Segel nach einem der Ansprüche 1 bis 3, dadurch gekennzeichnet, daß die Kunststoffschicht aus Polyolefin und Fluorkohlenstoffharz mit der Polyesterfolie durch Schmelzextrusion und gegebenenfalls Kalandrierung verbunden ist.

7. Segel nach einem der Ansprüche bis 6, dadurch gekennzeichnet, daß die Kunststoffschicht aus Fluorkohlenstoffharz mit bis zu 50 Gew.-%, vorzugsweise 5 bis 35 Gew.-%, Polyester, insbesondere Polyethylenterephthalat, besteht.

8. Segel nach Anspruch 1, dadurch gekennzeichnet, daß es dreischichtig aufgebaut ist, wobei die Polyesterfolie eine äußere Schicht, eine Kunststoffschicht aus Polyolefin die mittlere Schicht und ein Vliesstoff die andere äußere Schicht bildet.

9. Segel nach Anspruch 1, dadurch gekennzeichnet, daß es vierschichtig aufgebaut ist, wobei eine Kunststoffschicht aus Polyolefin die erste und die dritte Schicht, die Polyesterfolie die zweite und ein Vliesstoff die vierte Schicht bildet.

10. Segel nach Anspruch 8 oder 9, dadurch gekennzeichnet, daß der Vliesstoff aus Polyester- oder Polyolefinfasern besteht.

11. Segel nach einem der Ansprüche 8 bis 10, dadurch gekennzeichnet, daß der Vliesstoff ein Flächengewicht von 10 bis 200, insbesondere 20 bis 80 g/m² besitzt.

Europäisches Patentamt

# EUROPÄISCHER RECHERCHENBERICHT

Nummer der Anmeldung

EP 90 10 4601

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 281 322 (K.F. OLSEN)<br>* Spalte 4, Zeile 29 - Spalte 6, Zeile 3 * | 1,2,4 | B 63 H 9/06<br>B 32 B 27/36 |
| A | FR-A-2 207 804 (ICI)<br>* Ansprüche 1-7 * | 1,2,4 | |
| A | EP-A-0 056 657 (NORTH SAILS SURF ANTILLES N.V.)<br>* Seite 3, Zeile 25 - Seite 4, Zeile 24 * | 8-10 | |
| A | US-A-3 871 947 (BREKKEN)<br>* Spalte 2, Zeile 46 - Spalte 3, Zeile 44 * | 1,4 | |
| P,X | DE-U-8 903 609 (HOECHST AG)<br>* Ansprüche 1-6 * | 1-5 | |
| P,X | DE-U-8 910 535 (HOECHST AG)<br>* Ansprüche 1-3,8,9 * | 1,8-11 | |

RECHERCHIERTE SACHGEBIETE (Int. Cl.5)

B 32 B
B 63 H

Der vorliegende Recherchenbericht wurde für alle Patentansprüche erstellt

| Recherchenort | Abschlußdatum der Recherche | Prüfer |
|---|---|---|
| DEN HAAG | 20-07-1990 | MCCONNELL C.H. |